# EUROPEAN PATENT APPLICATION

(11) **EP 2 915 762 A1**
(43) Date of publication of application: **09.09.2015**
(21) Application number: 13852230.5
(22) Date of filing: 19.08.2013
(51) Int. Cl.: B65D 90/22, B65D 90/06, B65D 90/12, E02D 27/38

(54) **OUTDOOR TANK WATERPROOFING SHEET AND OUTDOOR TANK WATERPROOFING METHOD**

(30) Priority: 30.10.2012 JP 2012238611
(71) Applicant: Shin-Etsu Chemical Co., Ltd., Tokyo 100-0004 (JP)
(72) Inventor: SHIONO Yoshiyuki, Annaka-shi Gunma 379-0224 (JP); UNO Takao, Annaka-shi Gunma 379-0224 (JP); ENDO Akihiro, Annaka-shi Gunma 379-0224 (JP); NAKAJIMA Takeshi, Tokyo 100-0004 (JP); YAMAGUCHI Hisaharu, Annaka-shi Gunma 379-0195 (JP); YODA Masahiro, Annaka-shi Gunma 379-0195 (JP)
(74) Representative: Stoner, Gerard Patrick
(86) International application number: PCT/JP2013/072086
(87) International publication number: WO 2014/069071

(57) **Abstract**

The present invention relates to an outdoor tank waterproofing sheet for covering the boundary region between the bottom of an outdoor tank, which is disposed on a base, and said base in a light-tight manner by spanning and adhering from the outdoor tank to the base, the sheet being characterized in being obtained from a single flexible elastomer layer. The present invention provides an outdoor tank waterproofing sheet and outdoor tank waterproofing method effective for preventing the infiltration of rainwater into the boundary region between the bottom of an outdoor tank, particularly a large tank that is often placed mainly at oil refineries, etc., and a base.

## Description

### TECHNICAL FIELD

This invention relates to a waterproof sheet for use with an outdoor tank, typically a large volume tank as often installed in oil refinery plants or the like, which is effective for preventing rainwater from entering the boundary region between the bottom side of the tank and the foundation, and a method for the waterproof treatment of an outdoor tank.

### BACKGROUND ART

In conjunction with an outdoor tank, typically a large volume tank as often installed in oil refinery plants or the like, one problem known from the past is that rainwater enters the boundary region between the bottom side of the tank and the foundation. The problem is addressed by covering the boundary region between the bottom side of the large tank and the foundation with a pressure-sensitive adhesive butyl-based rubber sheet for preventing the entry of rainwater. However, since the PSA butyl-based rubber sheet is poor in weather resistance, heat resistance and freeze resistance, it fails to prevent the entry of rainwater over a long period of time, allowing rust generation at the bottom of the outdoor tank, with potential tank failure.

For example, Patent Document 1 (JP 3580887) describes a cover member comprising a sealant layer having salt barrier and waterproof properties, a protective layer, and a cover layer stacked. On use, it fails to prevent the entry of rainwater over a long period of time, and sometimes rust generates at the bottom of the outdoor tank.

Also Patent Document 2 (JP 4076673) describes a sealing member having a fold, made of vulcanized EPDM base rubber or unvulcanized rubber base butyl rubber. On use, it fails to prevent the entry of rainwater over a long period of time, and sometimes rust generates at the bottom of the outdoor tank.

On use of the cover member comprising a sealant layer having salt barrier and waterproof properties, a protective layer, and a cover layer stacked, described in Patent Document 1, the multilayer construction raises the problem that sheeting steps are complex and dimensional stability during sheeting is low.

Also, on use of the sealing member having a fold, made of vulcanized EPDM base rubber or unvulcanized rubber base butyl rubber, described in Patent Document 2, the multilayer construction raises the problem that sheeting steps are complex and dimensional stability during sheeting is low.

### SUMMARY OF INVENTION

### TECHNICAL PROBLEM

An object of the invention, which has been made under the above circumstances, is to provide an outdoor tank waterproof sheet which is effective for preventing the entry of rainwater over a long period of time, inhibiting rusting at the bottom of the outdoor tank, and preventing tank failure, and a method for the waterproof treatment of an outdoor tank.

### SOLUTION TO PROBLEM

Making extensive investigations to attain the above object, the inventors have found that a waterproof sheet consisting of a single layer elastomer is effective, preferably the elastomer has a specific hardness, tensile strength, elongation and tear strength, and in particular, a single layer sheet formed of silicone rubber as the elastomer is important from the standpoints of weather resistance, heat resistance and freeze resistance.

It has also been found that in the waterproof treatment of a boundary region between the bottom of an outdoor tank and a foundation using the waterproof sheet, application of a sealant to both side edges of the waterproof sheet is important.

The above object is attained by the invention which provides an outdoor tank waterproof sheet and a method for the waterproof treatment of an outdoor tank as defined below.
[1] An outdoor tank waterproof sheet which is attached to a boundary region between the bottom of an outdoor tank installed on a foundation and the foundation so as to extend from the outdoor tank to the foundation for forming a liquid tight cover to the boundary region, the waterproof sheet consisting of a single layer elastomer having flexibility.
[2] The waterproof sheet of [1], consisting of an elastomer having a Durometer Type A hardness of 15 to 90, a tensile strength of at least 3 MPa, an elongation of 100 to 800%, and a tear strength of at least 3 kN/m.
[3] The waterproof sheet of [1] or [2] wherein the elastomer is silicone rubber.
[4] A method of waterproof treating an outdoor tank installed on a foundation, a boundary region being defined between the bottom of the outdoor tank and the foundation, the method comprising the steps of attaching the waterproof sheet of any one of [1] to [3] across the boundary region so as to extend from the outdoor tank to the foundation, for thereby forming a liquid tight cover to the boundary region, and applying a sealant over side edges of the waterproof sheet.
[5] The waterproofing method of [4] wherein the waterproof sheet is directly attached to the outdoor tank and the foundation, without a primer.
[6] The waterproofing method of [4] or [5] wherein a plurality of waterproof sheets are juxtaposed to form a liquid tight cover to the boundary region and liquid-tightly overlapped to define an overlap between adjacent waterproof sheets, the overlap having a width of at least 5 mm, and a sealant is applied to the overlap.
[7] The waterproofing method of any one of [4] to [6] wherein the sealant is a silicone base sealant.
[8] The waterproofing method of any one of [4] to [7] wherein the foundation is made of concrete, mortar, asphalt concrete, asphalt mortar, or asphalt sand.

### ADVANTAGEOUS EFFECTS OF INVENTION

The invention provides a waterproof sheet and a waterproof treatment method, for an outdoor tank, typically a large volume tank as often installed in oil refinery plants or the like, which are effective for preventing rainwater from entering the boundary region between the bottom side of the tank and the foundation. The waterproof sheet is easy to form and improved in dimensional stability, and the method for the waterproof treatment of an outdoor tank ensures to waterproof the bottom side of the outdoor tank in a simple treatment way.

### BRIEF DESCRIPTION OF DRAWINGS

[FIG. 1] FIG. 1 is a schematic cross-sectional view showing the installation of an outdoor tank.
[FIG. 2] FIG. 2 is a partially cutaway cross-sectional view showing one embodiment of the waterproofing method of the invention.
[FIG. 3] FIG. 3 is a partially cutaway cross-sectional view showing another embodiment of the waterproofing method of the invention.
[FIG. 4] FIG. 4 shows a further embodiment of the water-proofing method of the invention, (A) being a partially cutaway plan view of waterproof sheets disposed to cover the outdoor tank, foundation and boundary region therebetween and (B) being a cross-sectional view of an overlap between waterproof sheets.
[FIG. 5] FIG. 5 is a partially cutaway cross-sectional view showing a still further embodiment of the waterproofing method of the invention wherein outer peripheries of a waterproof sheet are bonded with a sealant.

### DESCRIPTION OF EMBODIMENTS

The present invention relates to a method for the waterproof treatment of an outdoor tank made of steel or the like and installed on a foundation and aims to prevent rainwater from entering the boundary region between the bottom of the outdoor tank and the foundation. With the method, a waterproof sheet is attached and arranged across the boundary region so as to extend from the outdoor tank to the foundation for thereby establishing a liquid tight coverage over the boundary region with the waterproof sheet.

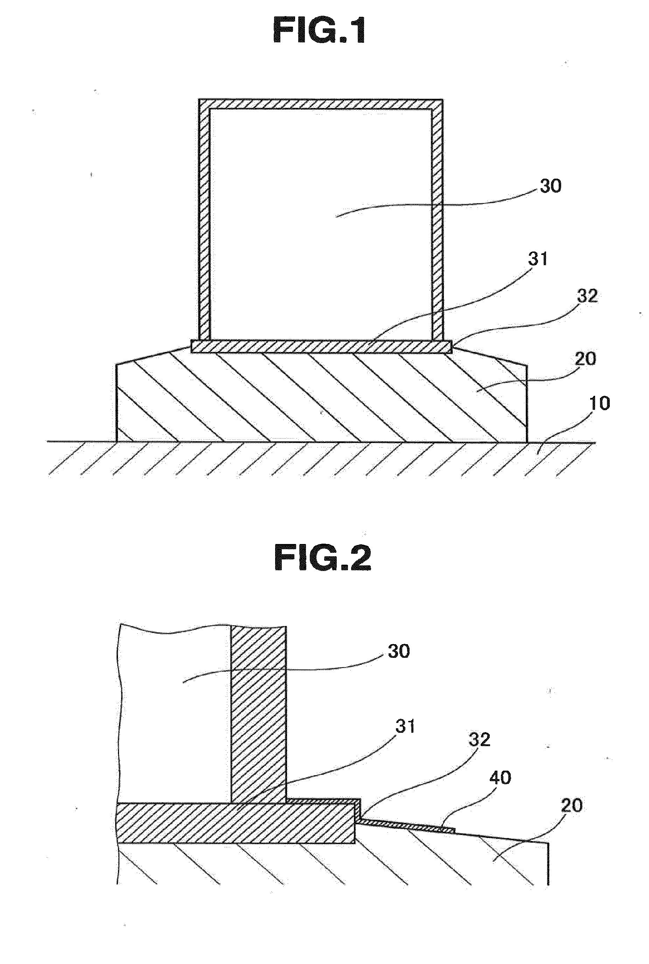

Referring to FIG. 1, one embodiment of the method is described. FIG. 1 illustrates an outdoor tank 30 installed on and supported by a foundation 20, the tank being filled with contents such as oils, asphalt or gases. The outdoor tank 30 is typically cylindrical, sized to a diameter of 10 to 80 meters and a height of 10 to 50 meters, and installed on the foundation 20 as described above. In FIG. 1, 10 depicts the ground. The bottom of the outdoor tank 30 is constructed by an annular plate 31, and the boundary region between the outdoor tank and the foundation is specifically a boundary region 32 between the annular plate 31 and the foundation 20. Described below is one embodiment of the method for preventing rainwater from entering the boundary region 32 for thereby inhibiting rust generation at the tank bottom and tank failure.

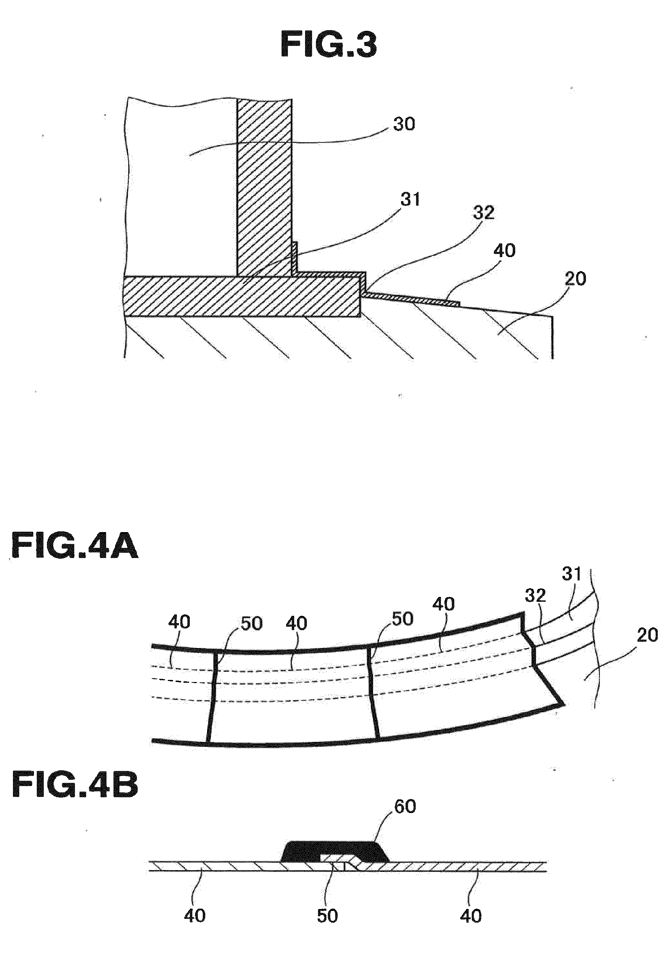

As long as the boundary region between the outdoor tank and the foundation is completely covered with a waterproof sheet without leaving any portions uncovered, it becomes possible to prevent entry of rainwater over a long period of time, inhibiting rust from generating at the tank bottom, i.e. annular plate and preventing tank failure. Referring to FIG. 2, one embodiment of coverage of the boundary region with the waterproof sheet is described. A waterproof sheet 40 is attached so as to cover the boundary region 32 between the foundation 20 and the annular plate 31. As shown in FIG. 3, the waterproof sheet 40 may be attached so as to cover even the side wall of the outdoor tank.

In most cases, a plurality of waterproof sheets are used. They are juxtaposed along the boundary region so that the entire boundary region is covered with the waterproof sheets. The area which may be readily exposed externally in the boundary region between the outdoor tank and the foundation is the interface between adjacent waterproof sheets. Referring to FIG. 4, adjacent waterproof sheets are preferably overlapped. The overlap 50 between adjacent waterproof sheets preferably has a width of at least 5 mm, more preferably at least 10 mm, and even more preferably at least 20 mm. If the width of the overlap between adjacent waterproof sheets is less than 5 mm, peel may occur during the treatment, failing in complete coverage of the boundary region 32, with potential entry of rainwater. If the width of the overlap between adjacent waterproof sheets is greater, for example, 50 mm or more, then the number of waterproof sheets necessary to cover the boundary region 32 entirely becomes larger, leading to an increased cost.

In the practice of the invention, a waterproof sheet obtained by forming elastomer into a single layer is used. As the elastomer, a silicone rubber having a Durometer A hardness of 15 to 90, a tensile strength of at least 3 MPa, an elongation of 100 to 800%, and a crescent tear strength of at least 3 kN/m, as prescribed in JIS K 6249, should be used when elasticity, rubber strength, workability during waterproof treatment, and durability after waterproof treatment are taken into account. Because of a correlation between the rubber properties and the sheet properties, if hardness, tensile strength, elongation or tear strength is outside the range, problems arise during or after waterproof treatment. Specifically, if hardness is lower and elongation is higher, there arise problems that the sheet is readily deformable, the attachment operation during waterproof treatment becomes difficult, and the sheet is readily shifted even after attachment.

Conversely, if hardness is higher and elongation is lower, there arise problems that since the sheet lacks flexibility, operation efficiency is low in that the attachment operation during waterproof treatment requires a precision in the positioning of the sheet; and after waterproof treatment, the sheet is shifted away since the sheet does not follow the tank that undergoes repetitive cycles of thermal expansion and shrinkage with the ambient temperature.

Also, if tensile strength or tear strength is lower, there arise problems that the sheet does not fully accommodate stresses induced by recesses and protrusions on the adherend surface during waterproof treatment, and the stresses can cause damages like cuts and tears to the sheet.

Physical properties are described in detail. JIS K 6249 prescribes testing methods for uncured and cured silicone rubber which include several cited standards. Hardness is in accord with Durometer Type A prescribed in JIS K 6253. The inventive waterproof sheet has a hardness in the range of 15 to 90, preferably 20 to 85, and more preferably 25 to 80.

Tensile strength and elongation (elongation at break) refer to the testing method prescribed in JIS K 6251. The rubber base has a tensile strength of at least 3 MPa, preferably at least 4 MPa, and more preferably at least 5 MPa; and an elongation of 100 to 800%, preferably 150 to 750%, and more preferably 200 to 700%.

Tear strength refers to the testing method prescribed in JIS K 6252. For the objects of the invention, it is desired to consider the tear strength of a crescent test piece because the stresses induced to the sheet by recesses and protrusions on the adherend surface can cause appearance damages like cuts and tears to the sheet surface. The crescent tear strength is at least 3 kN/m, preferably at least 5 kN/m, and more preferably at least 7 kN/m.

Although the type of elastomer of which the waterproof sheet is formed is not particularly limited, the preferred elastomers include silicone rubber, EPDM rubber, butyl rubber, chloroprene rubber, butadiene rubber, styrene-butadiene copolymer, urethane rubber, natural rubber, and silicone rubber/EPDM rubber composite (SEP rubber, by Shin-Etsu Chemical Co., Ltd.). When heat resistance, weather resistance and freeze resistance are taken into account, silicone rubber, EPDM rubber, butyl rubber, chloroprene rubber, and natural rubber are preferred typical examples. Silicone rubber is most preferred on the assumption that the service environment cycles between cold and hot climates.

In view of handling, the sheet may be either vulcanized or unvulcanized as long as it retains its shape under a working environment to be considered. Typical of the unvulcanized state are unvulcanized silicone rubber compositions and unvulcanized butyl rubber compositions.

When such compositions are vulcanized and sheeted, the vulcanizing method is not particularly limited. Compositions of the type which are already vulcanized and shaped into sheets are preferred to compositions of the in-situ cure type. Exemplary of the vulcanizing method are organic peroxide vulcanization, addition vulcanization, sulfur vulcanization, ultraviolet vulcanization, and electron beam vulcanization. The vulcanizing agent for curing the elastomer may be any well-known one.

For organic peroxide vulcanization, suitable agents include acyl organic peroxides such as p-methylbenzoyl peroxide and o-methylbenzoyl peroxide, alkyl organic peroxides such as dicumyl peroxide and 2,5-dimethyl-2,5-bis(tert-butylperoxy)hexane, percarbonate organic peroxides, and peroxyketal organic peroxides.

Addition vulcanization is carried out by reacting a polymer having at least two alkenyl groups per molecule with a compound having at least two functional groups capable of reaction with alkenyl groups per molecule in the presence of a catalyst. Hydrosilylation reaction is a typical preferred example in this case.

Sulfur vulcanization is a well-known technique commonly used for the vulcanization of synthetic rubbers.

Ultraviolet vulcanization (UV vulcanization) is by exposing a rubber compound containing a photopolymerization initiator to UV of wavelength 200 to 400 nm for achieving cure in several seconds to several tens of seconds. Typical of the wavelength for exposure are 254 nm and 365 nm. The photopolymerization initiator may be any well-known one, for example, Irgacure 184 (BASF).

Electron beam vulcanization (EB curing) is a curing technique of artificially accelerating electrons, and utilizing the energy of electrons as a beam. Vulcanization is adjusted in terms of accelerating voltage and penetration depth. An exemplary EB vulcanization system is available from Iwasaki Electric Co., Ltd.

In addition to the components mentioned above, the elastomer-forming composition may further contain optional components, for example, fillers such as fumed silica, precipitated silica, ground quartz, diatomaceous earth, and calcium carbonate, electroconductive agents such as carbon black, conductive zinc white, and metal powders, and heat resistant agents such as iron oxide and cerium oxide. Further, hydrosilylation reaction regulators such as nitrogen-containing compounds, acetylene compounds, phosphorus compounds, nitrile compounds, carboxylates, tin compounds, mercury compounds, and sulfur compounds, internal parting agents such as dimethylsilicone oil, tackifiers, and thixotropic agents may be optionally added.

As the elastomer-forming composition, commercially available products may be used. For example, as the silicone rubber composition, compound KE-675-U may be used in combination with a curing agent C-25A/C-25B, C-19A/B, C-23N or the like. Also, X-34-1791-A and B is exemplary.

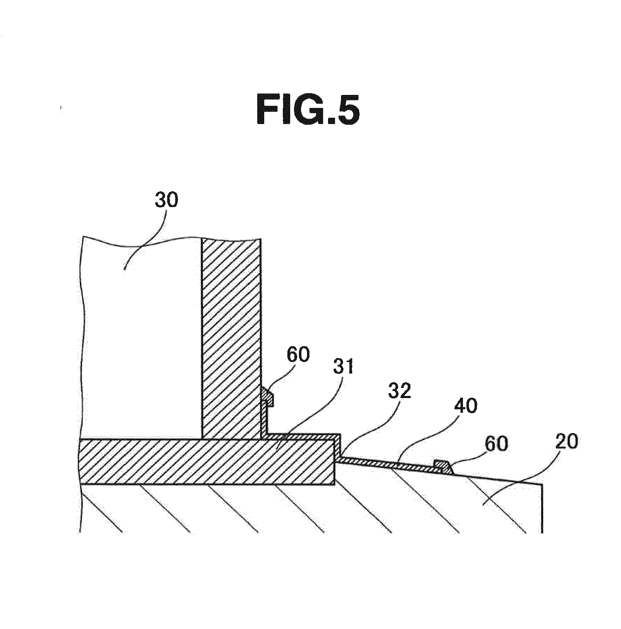

After waterproof treatment is carried out on the boundary region between the bottom of the outdoor tank and the foundation using the waterproof sheet as previously described, preferably a sealant 60 is applied to and disposed on those edges of the waterproof sheet 40 disposed adjacent to the outdoor tank 30 and the foundation 20 as shown in FIG. 5. This ensures better waterproof treatment. It is also preferred to apply the sealant 60 so as to cover the overlaps 50 as shown in FIG. 4 (B).

The sealant used herein may be any of well-known silicone, polysulfide and polyurethane base sealants, with the silicone base sealants being preferred for the treatment method. As the sealant, Sealant Master 300, Sealant 70, Sealant 701 and the like, available from Shin-Etsu Chemical Co., Ltd. may be used.

In the waterproof treatment method of the invention, it is preferred to attach the waterproof sheet 40 to the foundation 20 and the annular plate 31 directly, without any primer. There is the problem that in the environment where water droplets are condensed due to a weather temperature difference or a very high humidity resulting from rain and snow, sheets cannot be applied until the adherend surface is dried. The primer-less application ability of the waterproof treatment method of the invention ensures that even when the adherend surface is wet, the sheet can be applied simply after the adherend surface is wiped with fabrics or wastes. This leads to the epoch-making advantage that waterproof treatment can be started immediately after the weather becomes good. Even when it rains during the treatment, the possibility of rainwater penetration is minimized.

### EXAMPLES

Examples are given below for illustrating the invention although the invention is not limited thereto. In Examples, all parts and percents are by weight.

### Example 1

A dimethylsilicone rubber composition was prepared by adding 0.5/2.0 parts of addition crosslink curing agent C-25A/C-25B (Shin-Etsu Chemical Co., Ltd.) to 100 parts of millable dimethylsilicone rubber compound KE-675-U (Shin-Etsu Chemical Co., Ltd.), and milling on a two-roll mill. The composition was calendered onto an embossed PET film 100 µm thick to form a sheet 0.7 mm thick, and continuously heat cured in a heating furnace at 140°C for 10 minutes, yielding a waterproof sheet on a PET film.

The rubber base-adjacent PET film was peeled, leaving a waterproof sheet which was evaluated for Durometer Type A hardness, tensile strength, elongation at break, tear strength, and initial and long-term waterproofness by the test described below. The results are shown in Table 1.

In a waterproof test, a plurality of waterproof sheets of 300 mm by 1,000 mm, obtained as above, were sequentially attached across the boundary region between an outdoor tank and a foundation such that the overlap between two adjacent waterproof sheets might have a distance of 25 mm. Sealant Master 300 was applied as the sealant to bury the outer peripheries of the waterproof sheets over a distance of 20 mm.

### Example 2

A dimethylsilicone rubber composition was prepared by adding 1.0 part of organic peroxide vulcanizing agent C-23N (Shin-Etsu Chemical Co., Ltd.) to 100 parts of millable dimethylsilicone rubber compound KE-675-U (Shin-Etsu Chemical Co., Ltd.), and milling on a two-roll mill. The composition was calendered onto an embossed PET film 100 µm thick to form a sheet 0.7 mm thick, and continuously heat cured in a heating furnace at 140°C for 10 minutes, yielding a waterproof sheet on a PET film.

The subsequent procedures were carried out as in Example 1.

### Example 3

A dimethylsilicone rubber composition was prepared by adding 0.5/2.5 parts of addition or hydrosilylation reaction vulcanizing agent C-19A/B (Shin-Etsu Chemical Co., Ltd.) to 100 parts of millable dimethylsilicone rubber compound KE-675-U (Shin-Etsu Chemical Co., Ltd.), and milling on a two-roll mill. The composition was calendered onto an embossed PET film 100 µm thick to form a sheet 0.7 mm thick, and continuously heat cured in a heating furnace at 140°C for 10 minutes, yielding a waterproof sheet on a PET film.

The subsequent procedures were carried out as in Example 1.

### Example 4

100 parts each of X-34-1791-A and B (Shin-Etsu Chemical Co., Ltd.) were weighed, agitated, and mixed. The resulting composition was calendered onto an embossed PET film 100 µm thick to form a sheet 0.7 mm thick, and continuously heat cured in a heating furnace at 140°C for 10 minutes, yielding a waterproof sheet on a PET film.

The subsequent procedures were carried out as in Example 1.

### Example 5

100 parts of each of liquid silicones KE-1990-50A and KE-1900-50B (Shin-Etsu Chemical Co., Ltd.) were weighed, agitated and mixed. The resulting liquid silicone composition was coated onto an embossed PET film 100 µm thick to form a sheet 0.7 mm thick using a comma coater, and continuously heat cured in a heating furnace at 140°C for 10 minutes, yielding a waterproof sheet on a PET film.

The subsequent procedures were carried out as in Example 1.

### Waterproofness test

Initial waterproofness was evaluated after one month of weathering from the treatment and rated OK (○) for no rainwater entry or NG (x) when rainwater entry was found.

Long-term waterproofness was evaluated after one year of weathering from the treatment and rated OK (○) for no rainwater entry or NG (x) when rainwater entry was found.

### Dimensional stability during sheeting

All Examples were sheeted to 300 mm by 1,000 mm, followed by dimension measurement. The dimensions fell within 300±2 mm and 1,000±2 mm, indicating satisfactory dimensional stability during sheeting.

**Table 1**

| | Example 1 | Example 2 | Example 3 | Example 4 | Example 5 |
|---|---|---|---|---|---|
| Hardness, Durometer Type A | 75 | 76 | 74 | 27 | 50 |
| Tensile strength (MPa) | 8.5 | 11 | 8.5 | 3.5 | 7.0 |
| Elongation at break (%) | 250 | 230 | 270 | 260 | 300 |
| Tear strength, crescent (kN/m) | 11 | 12 | 10 | 5 | 7 |
| Initial waterproofness | ○ | ○ | ○ | ○ | ○ |
| Long-term waterproofness | ○ | ○ | ○ | ○ | ○ |

### Example 6

An EPDM rubber compound was prepared by mixing 100 parts of EPDM polymer having a diene content of 4.5% and a Mooney viscosity (100°C) of 44 (trade name PX-46H by Mitsui Chemicals, Inc.) with 120 parts of Asahi #60 (Asahi Carbon Co., Ltd.) as a filler, 60 parts of Diana Process Oil PW380 as a plasticizer, 5 parts of calcium oxide as a dehydrating agent, and 5.8 parts of phenyl-modified organohydrogenpolysiloxane having a Si-H content of 0.0076 mol/g as a crosslinker on a pressure kneader. The EPDM rubber compound was milled with 0.05 part of ethynyl cyclohexanol as a reaction regulator and 0.05 part of vinyl-containing cyclic polysiloxane on a two-roll mill until uniform. Further, 0.05 part of a platinum catalyst (Pt content 1%) was added on the two-roll mill until uniform. The resulting EPDM rubber compound was press formed at 170°C for 10 minutes into a waterproof sheet of 2 mm thick. The waterproof sheet was evaluated as in Examples 1 to 5. The results are shown in Table 2.

**Table 2**

| | Example 6 |
|---|---|
| Hardness, Durometer Type A | 67 |
| Tensile strength (MPa) | 8 |
| Elongation at break (%) | 170 |
| Tear strength, crescent (kN/m) | 13 |
| Initial waterproofness | ○ |
| Long-term water_proofness | ○ |

### REFERENCE SIGNS LIST

- 10: ground
- 20: foundation
- 30: outdoor tank
- 31: annular plate (part of outdoor tank)
- 32: boundary region between outdoor tank and foundation
- 40: waterproof sheet
- 50: overlap
- 60: sealant

## Claims

1. An outdoor tank waterproof sheet which is attached to a boundary region between the bottom of an outdoor tank installed on a foundation and the foundation so as to extend from the outdoor tank to the foundation for forming a liquid tight cover to the boundary region,
the waterproof sheet consisting of a single layer elastomer having flexibility.

2. A waterproof sheet of claim 1 consisting of an elastomer having a Durometer Type A hardness of 15 to 90, a tensile strength of at least 3 MPa, an elongation of 100 to 800% and a tear strength of at least 3 kN/m.

3. A waterproof sheet of claim 1 or 2 wherein the elastomer is silicone rubber.

4. A method of waterproof treating an outdoor tank installed on a foundation, a boundary region being defined between the bottom of the outdoor tank and the foundation, the method comprising the steps of attaching a waterproof sheet of any one of claims 1 to 3 across the boundary region so as to extend from the outdoor tank to the foundation, thereby forming a liquid-tight cover to the boundary region, and applying a sealant over side edges of the waterproof sheet.

5. A waterproofing method of claim 4 wherein the waterproof sheet is directly attached to the outdoor tank and the foundation, without a primer.

6. A waterproofing method of claim 4 or 5 wherein a plurality of the waterproof sheets are juxtaposed to form a liquid tight cover to the boundary region and liquid-tightly overlapped to define an overlap between adjacent waterproof sheets, the overlap having a width of at least 5 mm, and a sealant is applied to the overlap.

7. A waterproofing method of any one of claims 4 to 6 wherein the sealant is a silicone base sealant.

8. A waterproofing method of any one of claims 4 to 7 wherein the foundation is made of concrete, mortar, asphalt concrete, asphalt mortar, or asphalt sand.
